# EUROPEAN PATENT SPECIFICATION

(11) **EP 0 948 927 B1**
(45) Date of publication and mention of the grant of the patent: **02.01.2002**
(21) Application number: 99104574.1
(22) Date of filing: 08.03.1999
(51) Int. Cl.: A47J 31/40

(54) **Brewing unit for an espresso-type coffee vending machine**
Brüheinheit für eine Kaffeemaschine vom Espresso-Typ
Ensemble de préparation pour une machine à café espresso

(30) Priority: 06.04.1998 IT PN980029
(43) Date of publication of application: 13.10.1999
(73) Proprietor: Necta Vending Solutions S.p.A., 24030 Valbrembo (BG) (IT)
(72) Inventor: Gavazzi, Stefano, 24020 Albino, Bergamo (IT); Pesenti, Giancarlo, 24030 Almenno S. Bartolomeo, Bergamo (IT)
(74) Representative: Agostini, Agostino

(56) References cited:
- EP-A- 0 486 434
- EP-A- 0 553 955
- CH-A- 596 810
- DE-C- 3 909 738
- US-A- 3 288 049

## Description

The present invention refers to an espresso-type coffee venfing machine and, in particular, the brewing unit thereof.

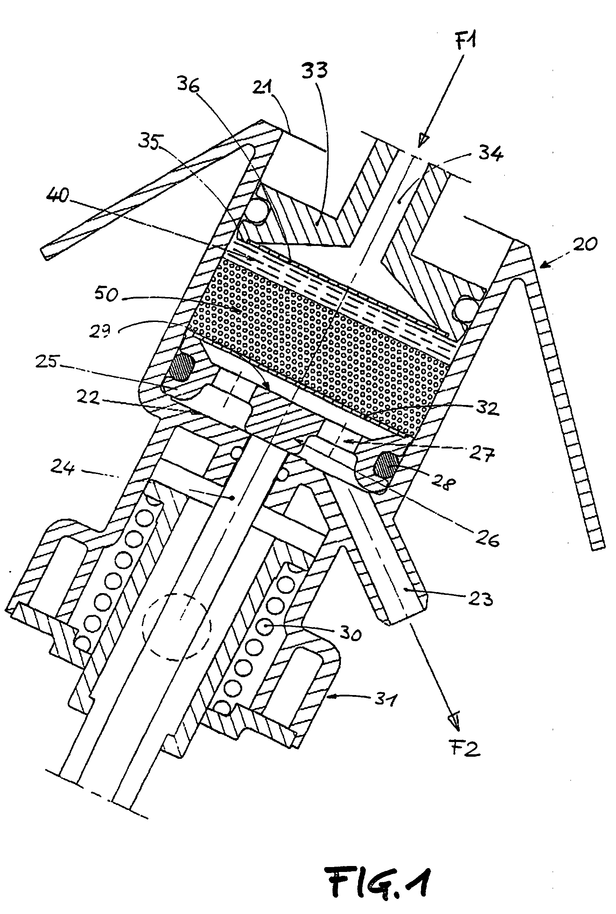

The accompanying Figure 1 is a longitudinal-section view of a current type of brewing unit for espresso-type coffee vending machine, which is shown to comprise a cylindrical brewing chamber 20, the bottom wall 22 of which is slidably passed through by the actuating rod 24 of a first plunger 25, which is referred to as the moving plunger in this description. This moving plunger 25 comprises a small central zone 26 having a greater thickness, an intermediate zone having a smaller thickness and perforated to feature a certain number of axial perforations 27 with a relatively large cross-section area, and a peripheral zone accomodating a sealing O-ring 28. A return spring 30, which is arranged around the rod 24 in a seat 31 that is made integral with the chamber 20, tends to keep the moving plunger 25 in a raised position with respect to the bottom 22 of the chamber 20. Above the upper face 29 of the moving plunger 25, which is concave in its shape, there is attached a filter 32 adapted to retain a dose 50 of coffee powder (raw material). A similar brewing unit is known from EP-A-486434 (cf. preamble of claim 1).

During the brewing phase, the chamber 20 is brought into alignment with a second plunger 33 (which is referred to as the stationary plunger in this description, since it is not due to perform any displacement during the brewing phase) which seals the upper portion 21 thereof. The stationary plunger 33 is passed through by an axial perforation 34, which is connected to the boiler of the vending machine via a pump (all these items not being shown in the Figure), and carries a filter 36 on its lower concave face 35.

In the brewing phase, the hot water that is introduced under pressure through the perforation 34 into the chamber 20 in the direction shown by the arrow F1, penetrates and seeps through the dose 50 of coffee powder and the filter 32, while forcing the moving plunger 25 to lower against the reaction of the return spring 30. The plunger 25 comes in this way into contact with the bottom wall 22 of the chamber 20 only with its central, thicker zone 26. The hot beverage, ie. the brew, is capable of percolating freely through the axial perforations 27 of the moving piston 25 to finally flow, in the direction shown by the arrow F2, down to the beverage dispensing point (not shown) along a tubing 23 that branches off from the same bottom wall 22 of the chamber 20. In fact, as this has already been stated earlier in this description, there are practically no flow restraints or resistances to be found downstream of the filter 32 carried by the moving plunger 25, since the axial perforations 27 have a relatively large cross-section area and terminate at a certain distance from the bottom wall 22 of the chamber 20.

A water film 40 forms between the dose 50 of coffee powder and the filter 36 carried by the stationary plunger 33. At the end of the brewing phase, such a water film 40 is then ejected through the axial perforation 34 of the stationary plunger 33 (in a direction which is the opposite of the one shown by the arrow F1) owing to the the moving plunger 25 being lifted from the bottom wall 22 of the chamber 20 by the action of the return spring 30.

Considering that the amount of hot water under pressure used for preparing an espresso-type coffee, in particular an Italian-style one, is very small (in practice, it does not exceed 30 ml), and considering also that, as stated above, there are practicalkly no flow resistances or restraints to be found downstream of said filter 32 carried by the moving plunger 25, it ensues that the flow of hot water through the dose 50 of coffee powder takes unavoidably place in an irregular manner. Experimental observations show in fact that the coffee powder is quite often wetted only incompletely by the hot water under pressure oozing through it. The resulting utilization of the coffee powder is therefore correspondingly inadequate, while the resulting beverage is poor in its quality.

It therefore is a main purpose of the present invention to improve the quality of the espresso-type coffee dispensed by a vending machine, with particular reference to Italian-style espresso-type coffee.

A further purpose of the present invention is to provide a construction of the brewing unit that enables it to be also retro-fitted at a low cost in existing espresso-type coffee vending machines in view of updating them and enhancing their performance capabilities.

According to the present invention, these and further aims are reached in a brewing unit for an espresso-type coffee vending machine with the characteristics as recited in the appended claims.

The features and advantages of the invention will anyway be more readily understood from the description of a preferred embodiment that is given below by way of non-limiting example with reference to the accompanying drawing, in which:
- Figure 1, that has already been described earlier in this description, is a longitudinal-section view of a traditional brewing unit of an espresso-type coffee vending machine during the brewing phase;
- Figure 2 is a view of a brewing unit according to the present invention, shown again during the brewing phase;
- Figure 3 is again a view of the brewing unit of Figure 2, which however is shown here at the end of the beverage dispensing phase.

Since a great majority of the parts constituting a brewing unit according to the present invention are of a fully traditional type, reference is made to the preceding description; in order to facilitate a comparison, those parts that are common to both the prior art and the present invention are indicated using the same reference numerals in all of the accompanying Figures. It should further be noticed that, if required, greater details may be found in a utility model application filed at the same date by the same Applicant.

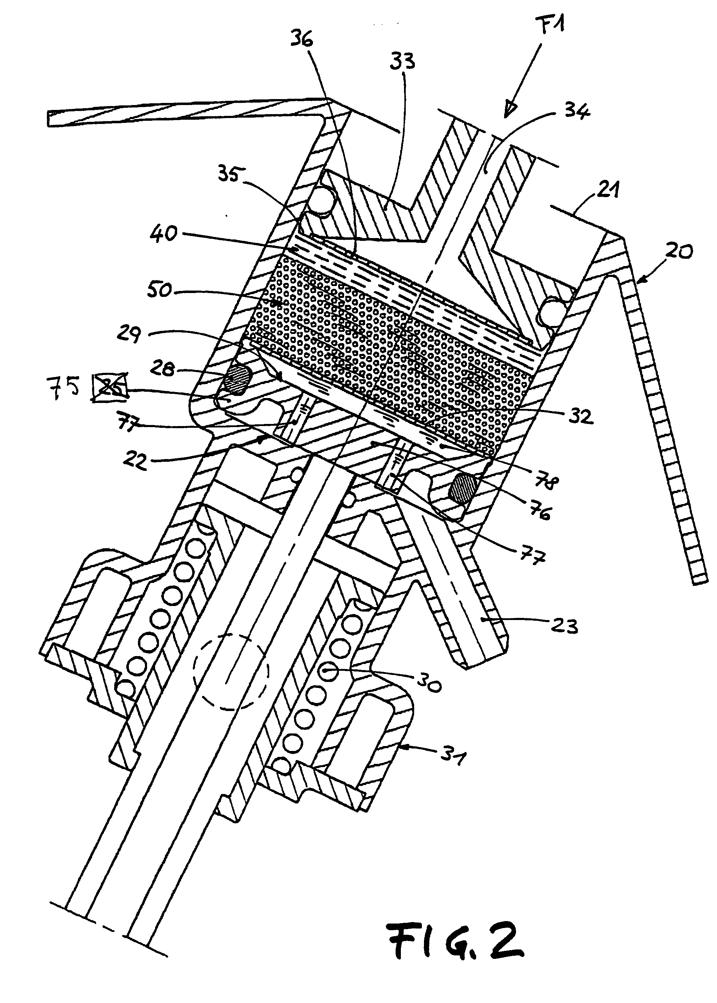

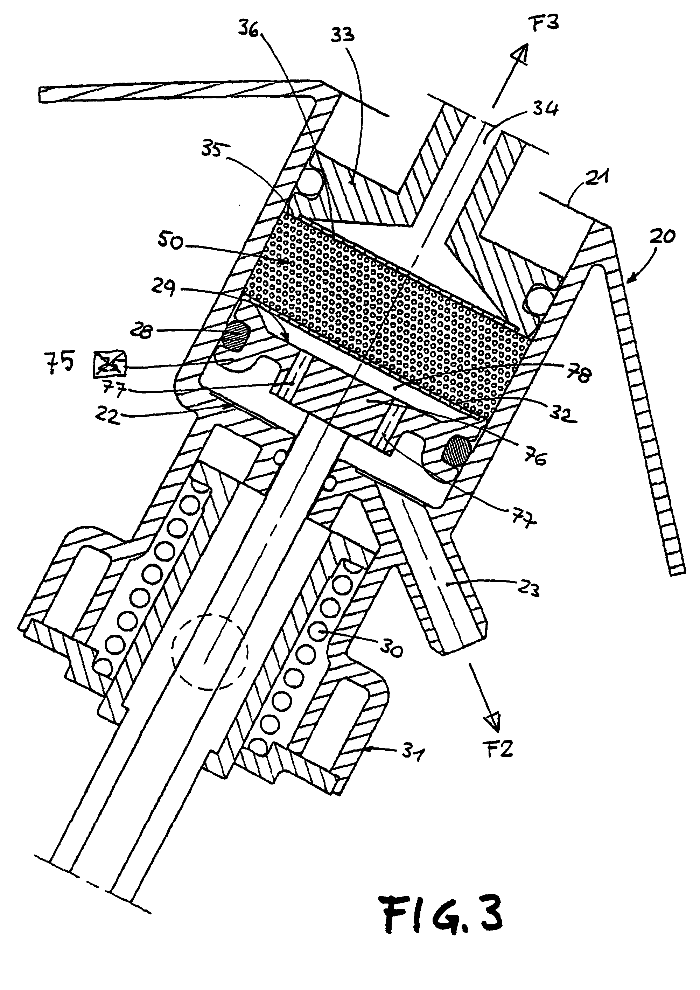

In Figures 2 and 3 it can be noticed that the central thicker zone 76 of the plunger 75 is provided, for the brew to flow out, with a plurality of axial channels 77 that have a reduced cross-sectional area as compared to the cross-sectional area of the chamber 20.

Such a feature should anyway not be considered a mere dimensional variation, but rather a particularly ingenious solution in its constructional simplicity, and therefore an inventive one, in view of ensuring complete, thorough wetting of the coffee powder.

In fact, when it is let into the chamber 20 through the perforation 34, ie. at the beginning of the brewing phase, the hot water under pressure forces the moving plunger 75 into lowering, against the reaction of the return spring 30, by such an extent as to enable the central thicker zone 76 to come into contact with the bottom wall 22 of the same chamber 20. The outlet (lower) section of the channels 77 therefore remains practically obstructed, ie. sealed by the bottom wall 22 (see Figure 2). In this manner, throughout the duration of the brewing phase, the hot water under pressure is not able to escape from the chamber 20, since it is impossible for it to flow out through the channels 77, and fills up the space 78 that is comprised between the filter 30 and the upper concave face 29 of the moving piston 75. All this has the effect of causing the hot water to flow in an even, uniform manner through the dose 50 of coffee powder and, therefore, the same dose to be fully, thoroughly wetted, as this has been demonstrated experimentally by the Applicant.

Thanks to such an improved utilization of the coffee powder, a better quality of the dispensed beverage is also ensured.

When the inlet of hot water under pressure in the chamber 20 is ended, and therefore also the beverage brewing phase terminates, the reaction of the return spring 27 becomes prevailing again, so that the moving piston 75 is raised from the bottom wall 22 of the chamber 20 (see Figure 3). The outlet section of the channels 77 is no longer obstructed and therefore allows for the hot beverage to flow down from the dose 50 of coffee powder, and the space 78 therebelow, to finally flow away through the tubing 23 leading to the beverage dispensing point. Also in this case, the water film 40 is of course ejected, at the end of the brewing phase, through the axial perforation 34 of the stationary plunger 33 (in the direction shown by the arrow F3 in Figure 3) owing to the moving plunger 75 being lifted from the bottom wall 22 by the reaction of the return spring 30.

A first advantage deriving from the present invention lies in a better quality of the hot beverage, for the same amount and quality of the raw material used, thanks to a more effective, complete wetting of the coffee powder (raw material).

A second advantage of the present invention lies in the fact that no component parts are required to be added to a substantially traditional brewing chamber, nor is it required for the well-known operating principle thereof to be modified or altered to any extent. The present invention, therefore, does not imply any significant increase in the costs of a vending machine.

A further advantage lies in the fact that the practical implementation of the invention consists in a plunger (see Figures 2 and 3) that can replace a traditional plunger (see Figure 1) with an operation that can be carried out even by a person lacking any special technical skill, such as the operator of or the person servicing a vending machine, also in view of retro-fitting existing vending machines to the purpose of bringing them to the state of the art.

Although the above description refers to a currently preferred embodiment of the present invention, it shall be appreciated that it is fully within the ability of those skilled in the art to develop further embodiments and variants of the present invention without departing from the scope thereof.

## Claims

1. Brewing unit for an espresso-type coffee vending machine comprising:
- a brewing chamber (20) with an elongated shape, which has an open end portion (21) and a bottom wall (22), and is provided with means (23) to connect it with the brew dispensing point;
- means (34) to let hot water under pressure into said brewing chamber (20);
- a perforated moving plunger (75) which is adapted to be forced by said hot water under pressure into displacing towards said bottom wall (22) against the reaction of countering means (30), and which carries on its upper face (29) a filter (32) adapted to accomodate the raw material (50),
**characterized in that**
- said moving plunger (75) comprises a central thicker zone (76) which is provided with a plurality of channels (77);
- the outlet section of said channels (77) being obstructed by said bottom wall (22) during the brewing phase, due to the hot water pressure which pushes the moving plunger (76) against the bottom wall (22).

2. Brewing unit according to claim 2, **characterized in that** said channel (77) extends substantially parallel to the axis of the moving plunger (75) with a cross-section area which is smaller than the one of the chamber (20).

3. Brewing unit according to claim 2 or 3, **characterized in that**, during the brewing phase, the hot beverage fills up the space (78) that is comprised between the filter (32) and the upper face (29) of the moving plunger (75), so as to ensure complete wetting of the raw material (50).

## Patentansprüche

1. Brüheinheit für einen Espresso-Kaffeeautomaten, die umfasst:
eine Brühkammer (20) mit einer länglichen Form, die einen offenen Endabschnitt (21) und eine Bodenwand (22) aufweist und mit einer Einrichtung (23) zur Verbindung derselben mit dem Getränkeausgabepunkt versehen ist;
eine Einrichtung (34), mit der unter Druck stehendes heißes Wasser in die Brühkammer (20) eingelassen wird;
einen perforierten, beweglichen Kolben (75), der von dem unter Druck stehenden heißen Wasser gegen die Gegenwirkung einer Gegeneinrichtung (30) auf die Bodenwand (22) zu verschoben wird, und der an seiner Oberseite (29) einen Filter (32) trägt, der das Ausgangsmaterial (50) aufnimmt,
**dadurch gekennzeichnet, dass**
der bewegliche Kolben (75) einen mittleren dickeren Bereich (76) umfasst, der mit einer Vielzahl von Kanälen (77) versehen ist;
der Auslassabschnitt der Kanäle (77) aufgrund des Drucks des heißen Wassers, durch den der bewegliche Kolben (76) an die Bodenwand (22) geschoben wird, während der Brühphase durch die Bodenwand (22) verschlossen wird.

2. Brüheinheit nach Anspruch 2, **dadurch gekennzeichnet, dass** der Kanal (77) im Wesentlichen parallel zur Achse des beweglichen Kolbens (75) verläuft, wobei die Querschnittsfläche desselben geringer ist als die der Kammer (20).

3. Brüheinheit nach Anspruch 2 oder 3, **dadurch gekennzeichnet, dass** während der Brühphase das heiße Getränk den Raum (78) ausfüllt, der zwischen dem Filter (32) und der Oberseite (29) des beweglichen Kolbens (75) eingeschlossen ist, um so vollständiges Benetzen des Ausgangsmaterials (50) zu gewährleisten.

## Revendications

1. Ensemble de préparation pour une machine à café expresso, comprenant :
une chambre de préparation **(20)** de forme allongée, qui a une partie d'extrémité ouverte **(21)** et une paroi inférieure **(22)** et est munie de moyens **(23)** pour la raccorder au point de distribution de la préparation ;
des moyens **(34)** pour faire entrer de l'eau chaude sous pression dans ladite chambre de préparation **(20)** ;
un plongeur mobile perforé **(75)** qui est adapté pour être forcé par ladite eau chaude sous pression à se déplacer en direction de ladite paroi inférieure **(22)** contre la réaction de moyens de contre-réaction **(30)**, et qui porte sur sa face supérieure **(29)** un filtre **(32)** adapté pour recevoir la matière première **(50)**,
**caractérisé en ce que**
ledit plongeur mobile **(75)** comprend une zone centrale plus épaisse **(76)** qui est munie d'une pluralité de canaux **(77)** ;
la section de sortie desdits canaux **(77)** étant obstruée par ladite paroi inférieure **(22)** durant la phase de préparation, sous l'effet de la pression de l'eau chaude qui pousse le plongeur mobile **(76)** contre la paroi inférieure **(22)**.

2. Unité de préparation selon la revendication 2, **caractérisée en ce que** ledit canal **(77)** s'étend sensiblement parallèlement à l'axe du plongeur mobile **(75)** avec une aire de section transversale qui est plus petite que celle de la chambre **(20)**.

3. Unité de préparation selon la revendication 2 ou 3, **caractérisé en ce que**, durant la phase de préparation, la boisson chaude remplit l'espace **(78)** qui est compris entre le filtre **(32)** et la face supérieure **(29)** du piston mobile **(75)**, de manière à garantir un mouillage complet de la matière première **(50)**.
